Europäisches Patentamt

European Patent Office

Office européen des brevets

(19)

(11) Veröffentlichungsnummer : **0 062 893**
**B1**

# (12) EUROPÄISCHE PATENTSCHRIFT

(45) Veröffentlichungstag der Patentschrift :
20.02.85

(21) Anmeldenummer : 82102968.3

(22) Anmeldetag : 07.04.82

(51) Int. Cl.⁴ : **A 23 L  1/221**, A 23 F  3/42,
**B 01 D  11/02**

(54) Verfahren zur Herstellung von Pflanzenextrakten mit verbesserten sensorischen Eigenschaften.

(30) Priorität : 15.04.81 DE 3115157

(43) Veröffentlichungstag der Anmeldung :
20.10.82 Patentblatt 82/42

(45) Bekanntmachung des Hinweises auf die Patenterteilung : 20.02.85 Patentblatt 85/08

(84) Benannte Vertragsstaaten :
AT BE CH DE FR GB IT LI LU NL SE

(56) Entgegenhaltungen :
EP-A- 0 010 665
DE-A- 2 709 033
DE-A- 2 931 395
DE-B- 2 436 130
US-A- 4 167 589

(73) Patentinhaber : Henkel Kommanditgesellschaft auf Aktien
Postfach 1100 Henkelstrasse 67
D-4000 Düsseldorf-Holthausen (DE)

(72) Erfinder : Wüst, Reinhold
Jahnstrasse 23
D-4044 Kaarst (DE)
Erfinder : Pfeiffer, Hans, Dr.
Röntgenstrasse 32
D-5657 Haan (DE)
Erfinder : Van der Mei, Henk
Am Hisskamp 4
D-3260 Rinteln 3 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein Verfahren zur Herstellung von Pflanzenextrakten mit verbesserten sensorischen Eingenschaften, wobei man die Pflanzenteile zunächst einer ersten Extraktion mit verflüssigtem oder überkritischem Gas unterwirft, danach eine zweite Extraktion mit Wasser oder einem organischen Lösungsmittel durchführt, beide Extrakte vereinigt und trocknet, dadurch gekennzeichnet, daß man die in der ersten Extraktion mit verflüssigtem oder überkritischem Gas gewonnenen Pflanzeninhaltsstoffe im Abscheidebehälter der Extraktionsanlage auf einem pulver- oder granulatförmigen Trägermaterial niederschlägt, den in der zweiten Extraktion mit Wasser und/oder einem einwertigen Alkohol mit 1-3 C-Atomen erhaltenen Extrakt trocknet und gegebenenfalls zerkleinert und die beiden trockenen Extraktionsprodukte durch Mischen vereinigt.

Bei der üblichen Herstellung wäßriger Auszüge mit anschließender Aufkonzentrierung und Trocknung über hierzu geeignete technische Verfahren, wie Sprühtrocknung, Sprühgranulierung, Extrudierung und ähnlichem geht ein großer Teil Leicht flüchtiger Aromatoffe verloren bzw. temperaturlabile Inhaltsstoffe werden zerstört, so daß eine Beeinträchtigung der Aromaqualität der Produkte die Folge ist. Es sind auch verschiedene Verfahren bekannt, um die temperaturlabilen, geruchsaktiven oder sonstigen für das Aroma oder die Wirksamkeit des Extraktes wesentlichen Inhaltsstoffe auf schonendem Wege bei niedrigen Temperaturen zu extrahieren, so daß die ursprüngliche Zusammensetzung weitgehend erhalten bleibt. Diese Verfahren verwenden entweder niedrig siedende Lösungsmittel oder komprimierte Gase, vor allem $CO_2$, in verflüssigtem oder überkritischem Zustand. Es ist auch bekannt, daß man die in den o. g. Lösungsmitteln nicht löslichen polaren Inhaltsstoffe des Pflanzenmaterials in einer nachgeschalteten Extraktion mit Wasser, Ethanol oder anderen geeigneten Lösungsmitteln entfernen kann, und daß die vereinigten Extrakte mit bekannten üblichen Verfahren getrocknet bzw. instantisiert werden können (vgl. DE-OS 2 709 033 und 2 931 395).

Nun führt zwar eine Sprühtrocknung der vereinigten Extrakte zu trockenen und gut wasserlöslichen Produkten, gleichzeitig geht jedoch während des Sprühtrocknungsvorgangs ein Teil des Aromas wieder verloren, so daß die während der schonenden Extraktion in der ersten Stufe erzielten Vorteile für das Endprodukt nicht in vollem Umfang realisiert werden können.

Diesem Mangel hilft die Erfindung durch das eingangs beschriebene Verfahren ab. Danach wird das zu extrahierende Pflanzenmaterial zunächst einer ersten Extraktion mit einem verflüssigtem oder überkritischem Gas unterworfen, wobei in an sich bekannter Weise gearbeitet wird. (Vergl. Angewandte Chemie (1978) Heft 10, S. 747-774). Hierfür kommen in erster Linie Kohlendioxid, aber auch andere gesundheitlich unbedenkliche Gase, wie Districkstoffoxid, niedermolekulare gegebenenfalls halogenierte Kohlenwasserstoffe mit 1-2 C-Atomen, wie Ethan, Ethylen, Difluorethylen, Trifluormethan, Pentachlorethan oder Schwefelhexafluorid infrage.

Die extrahierten Pflanzeninhaltsstoffe werden im Abscheidebehälter der Extraktionsanlage unmittelbar auf ein geeignetes Trägermaterial niedergeschlagen. Hierfür kommen in wasserlösliche und wasserunlösliche Substrate, z. B. Kohlenhydrate, wie Dextrose, Milchzucker, Saccharose, Dextrin, Maltodextrin, Stärke, Stärkeabbauprodukte, Milchpulver, aber auch Kochsalz und dgl. in Betracht.

Besonders elegant läßt sich das Verfahren gestalten, wenn man bei einer chargenweisen Verarbeitung des Rohmaterials den sprühgetrockneten wäßrigen oder alkoholischen Extrakt einer vorausgegangenen Charge als Trägermaterial für die Abscheidung des Extraktes einer nachfolgenden Gas-Extraktionsstufe einsetzt.

Das Trägermaterial wird unmittelbar in den Abscheidebehälter der Extraktionsanlage eingebracht, so daß sich der Extrakt während des Extraktionsvorganges auf diesem Trägermaterial niederschlägt. Die Abscheidung der Extrakte erfolgt durch Druck- und/oder Temperaturänderung. Die Menge an Trägermaterial wird so bemessen, daß nach der Entspannung ein trockenes, pulver- oder granulatförmiges Produkt erhalten wird, das gegebenenfalls durch Mahlen weiter zerkleinert werden kann.

Der Rückstand der Gas-Extraktion wird anschließend einer zweiten Extraktion mit Wasser und/oder einem einwertigen Alkohol mit 1-3 C-Atomen, z. B. Ethanol oder wäßriges Ethanol, Methanol, Propanol oder Isopropanol, unterworfen. Die dabei gewonnenen Extrakte werden zunächst getrocknet, vorzugsweise durch Sprühtrocknung, wobei gegebenenfalls Hilfsstoffe und Füllmittel, wie Dextrin, Gummi arabicum, Glukosesirup oder dgl. zugefügt werden können. Erst danach werden die trockenen Extraktionsprodukte beider Extraktionsstufen miteinander vermischt. Auf diese Weise wird vermieden, daß die besonders empfindlichen Extrakte der Gas-extraktion einem Trocknungsvorgang unterworfen werden müssen.

Die Erfindung wird insbesondere bei der Herstellung von Extrakten aus pflanzlichen Rohstoffen, wie Blättern, Blüten oder Früchten, die üblicherweise als Tees Verwendung finden, angewendet, beispielsweise bei der Herstellung von Kamillen-, Fenchel-, Pfefferminz-, Lindenblüten-, Früchtetee, schwarzen Tee und dgl.. Sie kann jedoch vorteilhaft auch bei der Gewinnung von Gewürzen und Drogen, z. B. Pfefferextrakt, angewendet werden. Die gewonnenen Extrakte sind je nach Trägermaterial wasserlösliche, oder in Wasser dispergierbare Pulver oder Granulate. Sie können aber auch — je nach Verwendungszweck und Trägermaterial — als Fett- oder Öldispersionen durch Verkneten oder Verrühren mit Nahrungsfetten oder Ölen hergestellt werden.

## Beispiele

### Beispiel 1

1,0 kg Kamillenblüten werden mit $CO_2$ in einer geeigneten Druckextraktionsapparatur bei 30° und 250 bar 3 Stunden lang extrahiert und der Extrakt bei 24° und 35 bar auf 250 g Dextrose abgeschieden. Man erhält 287 g Produkt (I) mit einem angenehmen Geruch nach Kamille.

Der Rückstand der Extraktion wird zweimal mit je 3 l heißem Wasser aufgebrüht, gründlich gemischt und anschließend das Extraktwasser abgepreßt.

Der wäßrige Extrakt wird auf 10 % Trockenmasse aufkonzentriert und sprühgetrocknet :

      3,0 l wäßriger Extrakt,
    375,0 g Maltodextrin,
     56,0 g Gummi arabicum,
    300,0 g Glucosesirup, 42 DE

ergeben 928 g Sprühprodukt (II).

Die Mischung aus I und II ergibt 1,215 kg eines gut wasserlöslichen, rieselfähigen Kamillenteepulvers, das mit Wasser aufgegossen einen Kamillentee ergibt, der in seinen Geruchs- und Geschmackseigenschaften einem aus frischen Kamillenblüten aufgegossenen Tee nicht nachsteht. Dieses Teekonzentrat eignet sich ebenfalls vorzüglich für die Herstellung von Teetabletten.

Aus dem nach Beispiel 1 hergestellten Teekonzentrat wurden Teetabletten hergestellt und diese gegen Teetabletten aus einem herkömmlich hergestellten Teekonzentrat (Vergleich A) getestet. Dieses Teekonzentrat wurde durch Sprühtrocknung einer Mischung aus einem $CO_2$-Extrakt und einem wäßrigen Extrakt des Rückstandes hergestellt.

Die Teetabletten wurden als Teeaufguß gegen einen aus Kamillenblüten — derselben Charge, die auch zur Herstellung der Extrakte gedient hatte — frisch hergestellten Teeaufguß (Vergleich B) sensorisch geprüft.

Der sensorische Test wurde durch ein geschultes Geschmackspanel nach einer Vergleichsmethode mit 6-stufiger Bewertungsskala durchgeführt mit « 6 » als positivem Extrem und « 1 » als negativem Extrem.

Folgendes Ergebnis wurde erhalten ; wobei neben den Einzelkriterien Farbe, Aromaqualität, Aromastärke auch der Gesamteindruck sensorisch bewertet wurde :

|  | Beispiel 1 | Vergleich A (Sprühprodukt) | Vergleich B (Blütenaufguß) |
|---|---|---|---|
| Farbe | 4,1 | 3,3 | 4,7 |
| Aromaqualität | 4,0 | 3,8 | 3,9 |
| Aromastärke | 3,6 | 3,6 | 3,7 |
| Gesamteindruck | 3,8 | 3,6 | 3,7 |

Hinsichtlich der Aromaqualität und des Gesamteindrucks wurde der nach Beispiel 1 hergestellte Kamillentee sogar besser beurteilt als der aus Kamillenblüten hergestellte Vergleich.

Auch im Gehalt an Wirkstoffen (Matrizin, En-in-dicycloether, Bisabolol) entspricht das nach Beispiel 1 hergestellte Kamillenteekonzentrat nach dünnschichtchromatografischer Prüfung völlig dem Ausgangsrohstoff.

Insbesondere erweist sich das Verfahren im Hinblick auf die Erhaltung des temperaturempfindlichen Matrizins als vorteilhaft. Während in einem nach herkömmlichen Prozeß hergestellten Sprühprodukt colorimetrisch kein Matrizin mehr nachgewiesen werden kann, besitzt das nach Beispiel 1 hergestellte Produkt noch den vollen Gehalt.

### Beispiel 2

Ein nach $CO_2$-Extraktion von 1 kg Kamillenblüten verbleibender Rückstand wird gemäß Beispiel 1 mit insgesamt 6 l heißem Wasser extrahiert und nach Abtrennen der Blüten und Zusatz von Dextrin, Gummi arabicum und Glucosesirup sprühgetrocknet. Man erhält ca. 0,9 kg eines trockenen Pulvers, das als Trägermaterial für die Abscheidung eines aus einer zweiten 1 kg-Charge Kamillenblüten gewonnenen $CO_2$-Extraktes dient.

Zweckmäßigerweise verwendet man nur einen Teil des aus dem wäßrigen Extrakt gewonnenen Sprühkonzentrates zur Abscheidung und mischt diesen nach beendeter Extraktion mit dem Rest auf. Man erhält ca. 1,2 kg eines grünlichgelben, angenehm nach Kamille duftenden Pulvers.

# 0 062 893

### Beispiel 3

1,0 kg Fenchelsamen werden bei 40° und 300 bar 2 Stunden mit $CO_2$ extrahiert und bei 40 bar und 21° auf 300 g Dextrose abgeschieden. Man erhält 450 g eines pulverförmigen Produktes mit angenehmem Geruch nach Fenchel. Der Rückstand wird dreimal mit je 2 l Ethanol/$H_2O$ (1 : 1) durch Kochen im Rückfluß extrahiert. Die Lösung wird nach Abfiltrieren des Unlöslichen durch Eindampfen im Vakuum vom Ethanol befreit und der verbleibende Rest nach Zusatz von 500 g Dextrin oder Gummi arabicum sprühgetrocknet. Man erhält 620 g eines gelblichen Pulvers, das mit dem durch $CO_2$-Extraktion gewonnenen Teilextrakt 1,07 kg eines trockenen Fenchelextraktes ergibt, der sowohl zur Würzung als auch für Teeaufgüsse verwendet werden kann.

### Beispiel 4

1,0 kg gemahlener Pfeffer, dem mit $CO_2$ unter Druck bereits das ätherische Öl und ein großer Teil der Geschmacksstoffe entzogen sind, wird mit 3 l 96 %igem Ethanol am Soxhlet extrahiert. Man erhält nach Entfernen des Lösungsmittels in Vakuum 85 g eines dunkelgrünen Extrakts, der mit 500 g Milchzucker/Kochsalz (6 : 4) vermischt wird.

585 g dieses Produktes dienen als Vorlage für die Abscheidung des $CO_2$-Extraktes der nächsten Charge Pfeffer. Aus 1 kg Rohstoff werden nach 3-stündiger Extraktion bei 30° und 140 bar 60 g, enthaltend 30 ml ätherisches Öl, extrahiert, so daß man insgesamt 645 g eines hellen pulverförmigen Pfefferextraktes erhält, der ein abgerundetes und würziges Aroma und eine harmonisch abgestimmte Schärge besitzt.

### Beispiel 5

1 kg Fenchelsamen werden bei 40° und 200 bar 3 Stunden mit $N_2O$ extrahiert und bei 40 bar und 21° auf 300 g Milchzucker abgeschieden. Man erhält 470 g Produkt.

Der Rückstand wird entsprechend Beispiel 3 weiterbehandelt. Man erhält insgesamt 1,1 kg eines trockenen Fenchelextraktes.

### Beispiel 6

1 kg gemahlener Pfeffer wird bei 28° und 120 bar mit Trifluormethan ($CHF_3$) 3 Stunden lang extrahiert und der Extrakt auf 500 g Milchzucker/Kochsalz (6 : 4) bei 15° und 30 bar abgeschieden. Man erhält 580 g Produkt, das mit 66 g eines gemäß Beispiel 4 mit Ethanol aus dem Rückstand der Hochdruckextraktion gewonnenen Nachextraktes vermischt wird. Man erhält 646 g Gesamtextraktions-Produkt.

**Ansprüche**

1. Verfahren zur Herstellung von Pflanzenextrakten mit verbesserten sensorischen Eingenschaften, wobei man die Pflanzenteile zunächst einer ersten Extraktion mit verflüssigtem oder überkritischem Gas unterwirft, danach eine zweite Extraktion mit Wasser oder einem organischen Lösungsmittel durchführt, beide Extrakte vereinigt und trocknet, dadurch gekennzeichnet, daß man die in der ersten Extraktion mit verflüssigtem oder überkritischem Gas gewonnenen Pflanzeninhaltsstoffe im Abscheidebehälter der Extraktionsanlage auf einem pulver- oder granulatförmigen Trägermaterial niederschlägt, den in der zweiten Extraktion mit Wasser und/oder einem einwertigen Alkohol mit 1-3 C-Atomen erhaltenen Extrakt trocknet und gegebenenfalls zerkleinert und die beiden trockenen Extraktionsprodukte durch Mischen vereinigt.

2. Verfahren nach Anspruch 1, dadurch gekennzeichnet, daß die erste Extraktion mit verflüssigtem oder überkritischem $CO_2$, oder $N_2O$, oder einem gegebenenfalls halogeniertem Kohlenwasserstoff mit 1-2 C-Atomen, oder $SF_6$ durchgeführt wird.

3. Verfahren nach Ansprüchen 1 und 2, dadurch gekennzeichnet, daß als Trägermaterial in der ersten Extraktion Dextrose, Milchzucker, Saccharose, Dextrin, Stärke, Milchpulver oder Kochsalz verwendet wird.

4. Verfahren nach Ansprüchen 1 und 2, dadurch gekennzeichnet, daß im Chargenbetrieb gearbeitet wird, wobei in der ersten Extraktionsstufe als Trägermaterial der getrocknete und zerkleinerte Extraktionsrückstand einer zweiten Extrationsstufe einer späteren Charge verwendet wird.

5. Verfahren nach Ansprüchen 1 bis 3, dadurch gekennzeichnet, daß die zweite Extraktionsstufe mit Wasser, Ethanol oder Wäßrigem Ethanol durchgeführt wird.

6. Verfahren nach Ansprüchen 1 bis 4, dadurch gekennzeichnet, daß der Extrakt der zweiten Extraktionsstufe vor dem Vermischen mit dem Extrakt der ersten Extraktionsstufe sprühgetrocknet wird.

7. Anwendung des Verfahrens nach Ansprüchen 1-6 zur Herstellung von Tee-Extrakten oder Gewürzaromen.

4

# 0 062 893

## Claims

1. A process for the production of plant extracts having improved sensory properties, the plants initially being subjected to a first extraction with liquefied or supercritical gas, then to a second extraction with water or an organic solvent, after which the two extracts are combined and dried, characterized in that the plant ingredients obtained in the first extraction with liquefied or supercritical gas are deposited on a powder-form or granular carrier material in the separation vessel of the extraction apparatus, the extract obtained in the second extraction with water and/or a monohydric alcohol containing from 1 to 3 C-atoms is dried and optionally size-reduced and the two extraction products are combined by mixing.

2. A process as claimed in Claim 1, characterized in that the first extraction is carried out with liquefied $CO_2$ or $N_2O$ or an optionally halogenated $C_1$-$C_2$ hydrocarbon or $SF_6$.

3. A process as claimed in Claims 1 and 2, characterized in that dextrose, lactose, sucrose, dextrin, starch, milk powder or common salt is used as the carrier material in the first extraction.

4. A process as claimed in Claims 1 and 2, characterized in that it is carried out in batches, the dried and size-reduced extraction residue of a second extraction stage of a subsequent batch being used as carrier material in the first extraction stage.

5. A process as claimed in Claims 1 to 3, characterized in that the second extraction stage is carried out with water, ethanol or aqueous ethanol.

6. A process as claimed in Claims 1 to 4, characterized in that the extract of the second extraction stage is spray-dried before mixing with the extract of the first extraction stage.

7. The use of the process claimed in Claims 1 to 6 for producing tea extracts or spice flavourings.

## Revendications

1. Procédé de fabrication d'extraits végétaux avec des propriétés sensorielles améliorées, dans lequel la matière végétale est d'abord soumise à une première extraction par un gaz liquéfié ou hypercritique, puis à une deuxième extraction par l'eau ou par un solvant organique, les deux extraits sont réunis et séchés, procédé caractérisé en ce que le composant végétal obtenu dans la première extraction par le gaz liquéfié ou hypercritique, est précipité dans le vase séparateur du dispositif d'extraction, sur un support pulvérulent ou granulé, que l'extrait obtenu dans la deuxième extraction avec de l'eau et/ou un alcool monovalent comportant 1 à 3 atomes de C, est séché et éventuellement broyé, et que les deux extraits secs sont réunis par mélange.

2. Procédé selon la revendication 1, caractérisé en ce que la première extraction est effectuée avec du $CO_2$ ou du $N_2O$, ou un hydrocarbure éventuellement halogéné comportant 1 à 2 atomes de C, ou du $SF_6$ liquéfiés ou hypercritiques.

3. Procédé selon les revendications 1 et 2, caractérisé en ce que, comme support dans la première extraction, on utilise les dextrose, lactose, saccharose, dextrine, amidon, poudre de lait ou sel de cuisine.

4. Procédé selon les revendications 1 et 2, caractérisé en ce que l'opération est effectuée par charges séparées, pendant que dans la première étape d'extraction, on utilise comme support le résidu d'extraction séché et broyé de la deuxième étape d'extraction d'une charge antérieure.

5. Procédé selon les revendications 1 à 3, caractérisé en ce que la deuxième étape d'extraction est effectuée avec de l'eau, de l'éthanol ou de l'éthanol aqueux.

6. Procédé selon les revendications 1 à 4, caractérisé en ce que l'extrait obtenu dans la deuxième étape d'extraction est séché par atomisation avant d'être réuni avec l'extrait de la première étape d'extraction.

7. Application du procédé selon les revendications 1 à 6 à la fabrication d'extraits pour infusions ou de condiments.